# EUROPEAN PATENT APPLICATION

(11) **EP 3 842 481 A1**
(43) Date of publication of application: **30.06.2021**
(21) Application number: 19851342.6
(22) Date of filing: 21.08.2019
(51) Int. Cl.: C08J 5/24

(54) **PREPREG**

(30) Priority: 22.08.2018 JP 2018155564
(71) Applicant: Toray Industries, Inc., Tokyo, 103-8666 (JP)
(72) Inventor: WATARI, Ryohei, Iyo-gun, Ehime 791-3193 (JP); ARAI, Atsuhito, Iyo-gun, Ehime 791-3193 (JP); SUGIMOTO, Atsuki, Iyo-gun, Ehime 791-3193 (JP)
(74) Representative: Hoefer & Partner Patentanwälte mbB
(86) International application number: PCT/JP2019/032646
(87) International publication number: WO 2020/040200

(57) **Abstract**

The invention aims to provide a prepreg having high storage stability and serving suitably for producing components, such as structural members and interior members of aircraft and structural members of aircraft engines, that require high heat resistance under high temperature, high humidity conditions, good physical properties, and good combustion properties. The prepreg is produced by impregnating the component [A] specified below with an epoxy resin composition containing the components [B] to [D] specified below, wherein the component [A] in the prepreg accounts for 50 mass% or more: [A] carbon fiber, [B] epoxy resin, [C] fluorene type curing agent having a maximum particle size of 100 µm or less, and [D] thermoplastic resin.

## Description

### TECHNICAL FIELD

The present invention relates to a prepreg for production of a carbon fiber composite material having high flame retardance, high heat resistance under high temperature, high humidity conditions, and good mechanical properties.

### BACKGROUND ART

High in heat resistance and corrosion resistance as well as mechanical properties such as strength and rigidity, in spite of being light in weight, fiber reinforced composite materials, which consist mainly of reinforcing fiber and matrix resin, have been used conventionally in a wide variety of fields including aviation/aerospace, automobiles, railway vehicles, ships, civil engineering, construction, and sports goods. In applications requiring high heat resistance, in particular, fiber reinforced composite materials incorporating continuous reinforcing fibers have been used, in which carbon fiber, which is generally high in specific strength and specific elastic modulus, is adopted as reinforcing fiber while thermosetting resin is used as matrix resin.

For aviation/aerospace applications etc., the materials used have to be so high in heat resistance under high temperature, high humidity conditions that they can serve for use at high temperature and high humidity, and accordingly, such thermosetting resins as epoxy resin, bismaleimide resin, and cyanate ester resin are employed as matrix resin.

Although bismaleimide resin is suitable for use under high temperature, high humidity conditions, it is low in processability because of high intrinsic viscosity of bismaleimide and requires a high molding temperature as compared with epoxy resin, and therefore, it entails costs for subsidiary materials for the molding step or possibly requires reheating for postcuring, resulting in a longer molding time (for example Patent document 1). Also in the case of cyanate ester resin, although similarly high in glass transition point, it requires a high molding temperature and therefore, it is likely to entail costs for subsidiary materials for the molding step and requires a longer molding time as in the case of bismaleimide resin (for example Patent document 2).

On the other hand, epoxy resin has high processability and good mechanical properties and has been applied to aviation and aerospace uses, but as compared with bismaleimide resin and cyanate ester resin, it tends to be low in heat resistance for use under high temperature, high humidity conditions and can be suitable only for limited uses. To improve the heat resistance of epoxy resin, it is effective to increase the cross-linking density in the epoxy resin or introduce an aromatic rigid backbone into the cured epoxy resin structure. An increase in the cross-linking density may contribute to increasing the glass transition temperature under dry conditions, but cannot contribute to increasing the glass transition temperature after water absorption because the water absorption coefficient will increase due to the influence of hydroxyl groups generated from the reaction of the epoxy group. In addition, regarding the introduction of an aromatic rigid backbone in a cured epoxy resin structure, a document has disclosed a composition containing a curing agent having a fluorene structure to depress a decrease in glass transition temperature that may be caused by water absorption (Patent document 3).

When applying a curing agent having a fluorene structure as a curing agent component of an epoxy resin composition for producing a fiber reinforced composite material, the technique of processing it into an amorphous structure and blending it in the epoxy resin, for example, may be adopted because a curing agent having a fluorene structure has a high melting point due to a rigid backbone (for example Patent document 4). The above technique can be suitable when producing a fiber reinforced composite material by the resin transfer molding method in which a reinforcing fiber base is impregnated with a liquid matrix resin, but in the case of applying it to a prepreg, i.e. intermediate base material formed of reinforcing fiber impregnated with an uncured matrix resin, the viscosity of the matrix resin will be so low that an excessive resin flow may occur during the preparation of a prepreg, leading to such problems as a significant variation in the content of the reinforcing fiber and poor tackiness due to sinking of the resin during storage.

In addition, carbon fiber composite materials for aircraft manufacturing are required to have high flame retardance to prevent ignition and combustion in the event of a fire. As a technique for improving the flame retardance of a carbon fiber composite material, Patent document 5 proposes to blend an epoxy resin containing bromine or other halogens in its molecule, such as brominated epoxy resin. A compound containing a halogen, however, may generate a harmful substance such as hydrogen halide when being burned, and is likely to have an adverse influence on human health, natural environments, etc.

As another flame retardance development technology, Patent document 6, for example, discloses the use of a tetramethyl biphenyl type epoxy resin and a cresol novolac type epoxy resin in combination with a phosphate ester as a flame retardant and a phenol resin containing nitrogen as a curing agent. The use of this technique, however, may lead to the problem of decreasing the heat resistance and mechanical properties that are inherent in the epoxy resin.

### PRIOR ART DOCUMENTS

### PATENT DOCUMENTS

Patent document 1: Published Japanese Translation of PCT International Publication JP2008-539304
Patent document 2: Published Japanese Translation of PCT International Publication JP 2013-520552
Patent document 3: International Publication WO2014-049028
Patent document 4: International Publication WO2016-089724
Patent document 5: Japanese Unexamined Patent Publication (Kokai) No. HEI 9-278914
Patent document 6: Japanese Unexamined Patent Publication (Kokai) No. 2006-182991

### SUMMARY OF INVENTION

### PROBLEMS TO BE SOLVED BY THE INVENTION

In the case of the conventional carbon fiber composite materials produced by using epoxy resin compositions as matrix resins, a flame retardant is incorporated to realize an improved combustion properties, but carbon fiber composite materials containing fire retardants as additives cannot always be high in flame retardance, heat resistance, and mechanical properties all at once.

In view of such a technological background, the main object of the present invention is to provide a prepreg having high storage stability and serving suitably for producing components, such as structural members and interior members of aircraft, and structural members of aircraft engines, that require high heat resistance under high temperature, high humidity conditions, good physical properties, and good combustion properties.

### MEANS OF SOLVING THE PROBLEMS

The present invention adopts the following means to solve the problem. Specifically, it is a prepreg produced by impregnating the component [A] specified below with an epoxy resin composition containing the components [B] to [D] specified below, wherein the component [A] in the prepreg accounts for 50 mass% or more:
[A] carbon fiber,
[B] epoxy resin,
[C] fluorene type curing agent having a maximum particle size of 100 µm or less, and
[D] thermoplastic resin.

### ADVANTAGEOUS EFFECTS OF THE INVENTION

The present invention can provide a prepreg having high storage stability and serving suitably as an intermediate base material for producing a carbon fiber composite material that has high heat resistance under high temperature, high humidity conditions, good physical properties, and good combustion properties.

### DESCRIPTION OF PREFERRED EMBODIMENTS

Embodiments of the present invention are described in detail below.

The prepreg according to the present invention is a prepreg produced by impregnating the component [A] specified below with an epoxy resin composition containing the components [B] to [D] specified below, wherein the component [A] in the prepreg accounts for 50 mass% or more:
[A] carbon fiber,
[B] epoxy resin,
[C] fluorene type curing agent having a maximum particle size of 100 µm or less, and
[D] thermoplastic resin.
Hereinafter, such an epoxy resin composition containing the component [B] to [D] will be occasionally referred to simply as an epoxy resin composition.

Carbon fibers useful as the component [A] used in the prepreg according to the present invention include acrylic, pitch based, and rayon based carbon fibers, of which acrylic carbon fibers are particularly preferred because they are high in tensile strength.

Such an acrylic carbon fiber can be produced through, for example, a process as described below. A spinning solution that contains polyacrylonitrile produced from monomers incorporating acrylonitrile as primary component is spun by wet spinning, dry-wet spinning, dry spinning, or melt spinning. To produce carbon fiber, coagulated threads formed by spinning are subjected to a yarn-making step to provide a precursor, which is then subjected to subsequent steps such as flameproofing and carbonization.

There are no specific limitations on the form and alignment of the carbon fiber in the prepreg according to the present invention, and the carbon fiber to be used may have such a fiber structure as continuous fibers paralleled in one direction, single tow, woven fabric (plain weave, sateen weave, diagonal weave), knit fabric, nonwoven fabric, mat, and braid. In particular, they are preferably paralleled and aligned in one direction or in the form of woven fabric of plain weave, sateen weave, or twill weave, and carbon fibers preferably form layers. Here, continuous fibers refer to fibers with an average length of 10 mm.

In addition, two or more types of carbon fiber may be used together, or carbon fiber may be combined with other reinforcing fibers such as glass fiber, aramid fiber, boron fiber, PBO fiber, high strength polyethylene fiber, alumina fiber, and silicon carbide fiber.

Carbon fiber to be used for the present invention preferably has a tensile modulus in the range of 200 to 440 GPa. It is preferably in this range because it serves to produce a carbon fiber composite material having both high rigidity and high strength in a good balance. The elastic modulus is more preferably in the range of 230 to 400 GPa, still more preferably in the range of 260 to 370 GPa.

The carbon fiber preferably has a tensile elongation of 0.8% to 3.0%. Carbon fiber having a low tensile elongation is likely to fail to produce a carbon fiber composite material having a sufficiently high tensile strength and impact resistance. Furthermore, carbon fiber having a tensile elongation of more than 3% tends to decrease in tensile modulus. It is more preferable for the carbon fiber to have a tensile elongation of 1.0% to 2.5%, still more preferably 1.2% to 2.3%.

Here, the tensile modulus and tensile elongation of carbon fiber are measured according to JIS R7601 (2006).

The carbon fiber to be used for the present invention preferably contain 2,500 to 50,000 filaments per fiber bundle. If the number of filaments is less than 2,500, the fiber filaments may be easily meandered, leading to a decrease in strength. If the number of filaments is more than 50,000, resin impregnation may be difficult to perform during prepreg preparation or during molding. The number of filaments is more preferably in the range of 2,800 to 40,000.

Good commercial carbon fiber products include Torayca (registered trademark) T800S-24K, Torayca (registered trademark) T700S-12K, Torayca (registered trademark) T1100G-24K, Torayca (registered trademark) cloth CO6343 (carbon fiber T300-3K), and Torayca (registered trademark) cloth CK6244C (carbon fiber T700S-12K).

For example, the epoxy resin of the component [B] used for the present invention may be an epoxy resin having two or more glycidyl groups in a molecule. If the epoxy resin has only less than two glycidyl groups in a molecule, the cured product produced by heating and curing its mixture with a curing agent as described later will be low in glass transition temperature in some cases. Examples of the epoxy resin of the component [B] used for the present invention include bisphenol type epoxy resins such as bisphenol A type epoxy resin, bisphenol F type epoxy resin, bisphenol AD type epoxy resin, and bisphenol S type epoxy resin; brominated epoxy resins such as tetrabromobisphenol A diglycidyl ether; novolac type epoxy resins such as epoxy resin having a biphenyl backbone, epoxy resin having a naphthalene backbone, epoxy resin having a dicyclopentadiene backbone, phenol novolac type epoxy resin, and cresol novolac type epoxy resin; glycidyl amine type epoxy resins such as N,N,O-triglycidyl-m-aminophenol, N,N,O-triglycidyl-p-aminophenol, N,N,O-triglycidyl-4-amino-3-methyl phenol, N,N,N',N'-tetraglycidyl-4,4'-methylene dianiline, N,N,N',N'-tetraglycidyl-2,2'-diethyl-4,4'-methylene dianiline, N,N,N',N'-tetraglycidyl-m-xylylene diamine, N,N-diglycidyl aniline, and N,N-diglycidyl-o-toluidine; and others such as resorcin diglycidyl ether and triglycidyl isocyanurate. For aircraft and spacecraft industries, in particular, glycidyl amine type epoxy resins are preferably adopted because they serve to produce cured products having a high glass transition temperature and elastic modulus.

These epoxy resins may be used singly or a plurality thereof may be used in combination. Combining an epoxy resin showing fluidity at room temperature with an epoxy resin showing no fluidity at room temperature is effective for fluidity control of the matrix resin during heat-curing of the resulting prepreg. For example, if the matrix resin is high in fluidity before the start of gelation in the heat-curing step, disturbance in the orientation of carbon fibers may occur or the matrix resin may flow out of the system to cause the fiber mass content to go out of the predetermined range, possibly resulting in a carbon fiber composite material having deteriorated physical properties. Combining a plurality of epoxy resins showing different viscoelastic behaviors is effective for providing a prepreg having appropriate levels of tackiness properties and draping properties.

The component [C] is a fluorene type curing agent having a maximum particle size of 100 µm or less. For the present invention, a fluorene type curing agent is an amine curing agent having at least one fluorene backbone in a molecule. Atypical fluorene type curing agent has a 9,9-bis(aminophenyl)fluorene backbone as represented specifically by the structural formula [1] given below.

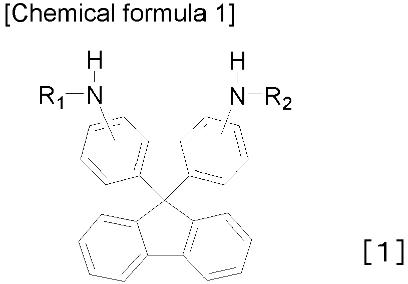

Here, R₁ and R₂ in the structural formula [1] are each a substituent selected from hydrogen and linear or branched alkyl groups having carbon numbers of 1 to 6. It is particularly preferable to adopt a fluorene type curing agent as represented by the structural formula [1] in which R₁ and R₂ are hydrogen.

In addition, the phenyl group and fluorene group contained in 9,9-bis(aminophenyl) fluorene may be substituted by one or more atoms or substituents. The aforementioned atoms and substituents are commonly selected from the group consisting of hydrogen, halogen, alkyl group, aryl group, alkoxy group, aryloxy group, nitro group, acetyl group, and trimethylsilyl group, of which hydrogen is particularly preferrd.

Specific examples of the fluorene type curing agent include 9,9-bis(4-aminophenyl) fluorene, 4-methyl-9,9-bis(4-aminophenyl) fluorene, 4-chloro-9,9-bis(4-aminophenyl) fluorene, 2-ethyl-9,9-bis(4-aminophenyl) fluorene, 2-iodo-9,9-bis(4-aminophenyl) fluorene, 3-bromo-9,9-bis(4-aminophenyl) fluorene, 9-(4-methylaminophenyl)-9-(4-ethylaminophenyl) fluorene, 1-chloro-9,9-bis(4-aminophenyl) fluorene, 2-methyl-9,9-bis(4-aminophenyl) fluorene, 2-fluoro-9,9-bis(4-aminophenyl) fluorene, 1,2,3,4,5,6,7,8-octafluoro-9,9-bis(4-aminophenyl) fluorene, 2,7-dinitro-9,9-bis(4-aminophenyl) fluorene, 2-chloro-4-methyl-9,9-bis(4-aminophenyl) fluorene, 2,7-dichloro-9,9-bis(4-aminophenyl) fluorene, 2-acetyl-9,9-bis(4-aminophenyl) fluorene, 2-chloro-9,9-bis(4-aminophenyl) fluorene, 2-t-butyl-9,9-bis(4-aminophenyl) fluorene, 9,9-bis(4-methylaminophenyl) fluorene, 9-(4-methylaminophenyl)-9-(4-aminophenyl) fluorene, 9,9-bis(4-ethylaminophenyl) fluorene, 9-(4-ethylaminophenyl)-9-(4-aminophenyl) fluorene, 9,9-bis(4-propylaminophenyl) fluorene, 9,9-bis(4-isopropylaminophenyl) fluorene, 9,9-bis(4-butylaminophenyl) fluorene, 9,9-bis(3-methyl-4-aminophenyl) fluorene, 9,9-bis(3-methyl-4-methylaminophenyl) fluorene, 9,9-bis(3-ethyl-4-aminophenyl) fluorene, 9,9-bis(3-phenyl-4-aminophenyl) fluorene, 9,9-bis(3,5-dimethyl-4-aminophenyl) fluorene, 9-(3,5-diethyl-4-aminophenyl)-9-(3-methyl-4-aminophenyl) fluorene, 9-(3-methyl-4-aminophenyl)-9-(3-chloro-4-aminophenyl) fluorene, 9,9-bis(3,5-diisopropyl-4-aminophenyl) fluorene, 9,9-bis(3-chloro-4-aminophenyl) fluorene, 9,9-bis(3-chloro-4-methyl aminophenyl) fluorene, 9-(4-methylaminophenyl)-9-(4-ethylaminophenyl) fluorene, 9,9-bis(3,5-dimethyl-4-methylaminophenyl) fluorene, 9-(3,5-dimethyl-4-methylaminophenyl)-9-(4-methyl aminophenyl) fluorene, 1,5-dimethyl-9,9-bis(3,5-dimethyl-4-methylaminophenyl) fluorene, 4-methyl-9,9-bis(4-methylaminophenyl) fluorene, 4-chloro-9,9-bis(4-methylaminophenyl) fluorene, and 9,9-bis(3,5-diethyl-4-methylaminophenyl) fluorene.

Of these, particularly preferred examples of the fluorene type curing agent include 9,9-bis(4-aminophenyl) fluorene, 9,9-bis(3-methyl-4-aminophenyl) fluorene, 9,9-bis(3-ethyl-4-aminophenyl) fluorene, 9,9-bis(3-phenyl-4-aminophenyl) fluorene, 9,9-bis(3,5-dimethyl-4-aminophenyl) fluorene, 9-(3,5-diethyl-4-aminophenyl)-9-(3-methyl-4-aminophenyl) fluorene, 9-(3-methyl-4-aminophenyl)-9-(3-chloro-4-aminophenyl) fluorene, 9,9-bis(3,5-diisopropyl-4-aminophenyl) fluorene, and 9,9-bis(3-chloro-4-aminophenyl) fluorene.

For the present invention, it is essential for the fluorene type curing agent of the component [C] to be in the form of particles having a maximum particle size of 100 µm or less. The maximum particle size is preferably 50 µm or less, still more preferably 30 µm or less. If the component [C] has a maximum particle size of 100 µm or less, it will be dissolved easily when the resin composition is cured, allowing the resin composition to have high curability. If the maximum particle size of the component [C] is 100 µm or less, furthermore, it serves to prevent undissolved matter from being left to cause deterioration in physical properties and prevent the curability of the resin existing in carbon fiber bundles or carbon fiber structures from being decreased as a result of the component [C] being filtered out through the carbon fiber while the carbon fiber is impregnated with the resin composition during the prepreg production process.

For the present invention, it is preferable for the fluorene type curing agent of the component [C] to have an average particle size of 0.1 µm to 30 µm. If the size is in this range, it will be dissolved easily when the resin composition is cured, allowing the resin composition to have high curability. Here, the average particle size is the 50% volume cumulative diameter (D50).

For the present invention, furthermore, it is preferable for the fluorene type curing agent of the component [C] to have a minimum particle size of 0.01 µm or more. If it is 0.01 µm or more, the handleability in the resin kneading step will increase.

The maximum particle size, average particle size, and minimum particle size referred to herein are determined by laser diffraction scattering analysis. A good example of an apparatus for laser diffraction scattering analysis for particle size determination is LA-950, manufactured by Horiba, Ltd. A specimen of a fluorene type curing agent is dispersed in, for example, an aqueous solution containing a commercial surface active agent and subjected to volume based diameter measurement, and the results are used as particle size distribution data. The particle size corresponding to 100% particle volume distribution is adopted as the maximum particle size and the smallest of the diameter measurements obtained is adopted as the minimum particle size.

It is preferable for the fluorene type curing agent of the component [C] for the present invention to have a crystal structure. If having a crystal structure, its reaction with the epoxy resin in the prepreg is depressed during storage of the prepreg, thus preventing the prepreg from deteriorating in tackiness properties. The existence of a crystal structure in the fluorene type curing agent of the component [C] can be examined by the procedure described below. Only the component [C] is analyzed by differential scanning calorimetry. To take measurements, differential scanning calorimetry is performed in a nitrogen atmosphere to observe the heat flow rate while heating from 50°C to 300°C at a temperature ramp rate of 5°C/min. If a crystal structure exists, an endothermic peak temperature attributed to the melting point of the crystal occurs at 180°C to 250°C. Here, the endothermic peak temperature is the temperature that represents the maximum endotherm. The existence of a crystal structure can be examined also by thinly spreading a small amount of an epoxy resin composition containing the components [B] to [D] over a glass plate and observed by the transmission method under a polarization microscope.

The epoxy resin composition to be used in the prepreg according to the present invention may contain a curing agent other than the component [C] with the aim of adjusting properties such as curability and storage stability. Such a curing agent is an amine curing agent having an amino group containing active hydrogen and able to form a crosslinked structure with epoxy resin. There are no specific limitations on it as long as it is not the component [C], but it is preferably an aromatic amine curing agent that serves to produce a cured epoxy resin having high heat resistance and high elastic modulus. Specific examples of such an aromatic amine curing agent include solid aromatic amine curing agents such as 4,4'-diaminodiphenyl methane, 3,3'-diaminodiphenyl sulfone, 4,4'-diaminodiphenyl sulfone, 3,3'-diisopropyl-4,4'-diaminodiphenyl methane, 3,3'-di-t-butyl-4,4'-diaminodiphenyl methane, 3,3'-diethyl-5,5'-dimethyl-4,4'-diaminodiphenyl methane, 3,3'-di-t-butyl-5,5'-dimethyl-4,4'-diaminodiphenyl methane, 3,3',5,5'-tetraethyl-4,4'-diaminodiphenyl methane, 3,3'-diisopropyl-5,5'-diethyl-4,4'-diaminodiphenyl methane, 3,3'-di-t-butyl-5,5'-diethyl-4,4'-diaminodiphenyl methane, 3,3'-di-t-butyl-5,5'-diisopropyl-4,4'-diaminodiphenyl methane, 3,3',5,5'-tetra-t-butyl-4,4'-diaminodiphenyl methane, and 3,3',5,5'-tetramethyl-4,4'-diaminodiphenyl methane; diethyl toluene diamines such as 2,2'-diethyldiaminodiphenyl methane, 2,4-diethyl-6-methyl-m-phenylene diamine, and 4,6-diethyl-2-methyl-m-phenylene diamine; and liquid aromatic amine curing agents such as 4,4'-methylene bis(N-methylaniline), 4,4'-methylene bis(N-ethylaniline), 4,4'-methylene bis(N-sec-butylaniline), and N,N'-di-sec-butyl-p-phenylene diamine; and mixtures of solid and liquid aromatic amine curing agents.

Of these, 3,3'-diaminodiphenyl sulfone, 4,4'-diaminodiphenyl sulfone, 3,3'-diisopropyl-4,4'-diaminodiphenyl methane, 3,3',5,5'-tetramethyl-4,4'-diaminodiphenyl methane, 3,3'-diisopropyl-5,5'-diethyl-4,4'-diaminodiphenyl methane, and 3,3',5,5'-tetraethyl-4,4'-diaminodiphenyl methane are preferred.

For the epoxy resin composition, the total content of all curing agents including the fluorene type curing agent of the component [C] and the curing agents other than the component [C] can be represented by the so-called H/E ratio, which is the ratio of the total number (H) of active hydrogen atoms in the curing agents to the total number (E) of epoxy groups in all epoxy resin components, and the content is preferably such that the H/E ratio is in the range of 0.7 or more and 1.2 or less, more preferably in the range of 0.85 or more and 1.10 or less. If the H/E ratio is less than 0.7, the resulting cured epoxy resin will lack in the degree of conversion, possibly leading to a decrease in heat resistance and material strength. If the H/E ratio is more than 1.2, on the other hand, the resulting cured epoxy resin will have a sufficiently high degree of conversion, but lack in the plastic deformability, possibly leading to a carbon fiber composite material with an insufficient impact resistance.

The ratio of the content of the component [C] to the total content of curing agents including the curing agent of the component [C] and those other than the component [C] can be represented by the so-called active hydrogen ratio of the component [C], that is, the ratio of the number of active hydrogen atoms attributed to the component [C] to the total the number (H) of active hydrogen atoms in the curing agents in the epoxy resin composition (i.e. all curing agents of the component [C] and other than the component [C]), and it is preferable for the active hydrogen ratio of the component [C] to be 25% or more. This is because in such a case, the cured product obtained by curing the epoxy resin composition will have a decreased water absorption coefficient and have a high glass transition temperature after water absorption, leading to a carbon fiber composite material that is high in flame retardance as well.

From the viewpoint of mechanical properties of the carbon fiber composite material, the combined use with a curing agent with a maximum particle size of 100 µm or less other than the component [C], for example an aromatic amine curing agent other than the component [C], is also preferred, and in this case, it is preferable that the active hydrogen ratio of the component [C] is 25% or more and 90% or less while the active hydrogen ratio of the curing agents other than the component [C] is 10% or more and 75% or less.

The addition of the thermoplastic resin of the component [D] is intended to control the tackiness properties of the resulting prepreg, control the fluidity of the matrix resin during the heat-curing of the prepreg, and provide a tough carbon fiber composite material without impairing its heat resistance or elastic modulus. Preferred thermoplastic resins used for such purposes generally include those in which the principal chain contains a bond selected from the group consisting of carbon-carbon bond, amide bond, imide bond, ester bond, ether bond, carbonate bond, urethane bond, thioether bond, sulfone bond, and carbonyl bond. Furthermore, these thermoplastic resins may partially contain crosslinked structures and may be either crystalline or noncrystalline. The component [D] may be mixed or dissolved in the epoxy resin composition, but it is preferably dissolved at least partially from the viewpoint of controlling the tackiness properties of the prepreg or controlling the fluidity of the matrix resin. If a thermoplastic resin is to be used in a dissolved state in the epoxy resin composition, it is preferably at least one thermoplastic resin selected from the group consisting of polyamide, polycarbonate, polyacetal, polyphenylene oxide, polyphenylene sulfide, polyallylate, polyester, polyamideimide, polyimide, polyetherimide, polyimide having a phenyl trimethyl indane structure, polysulfone, polyethersulfone, polyether ketone, polyether ether ketone, polyaramid, polyether nitrile, and polybenzimidazole.

In particular, to ensure high heat resistance, it is preferable for the thermoplastic resin of the component [D] to have a glass transition temperature in the range of 150°C to 350°C, more preferably in the range of 170°C to 350°C. If the glass transition temperature of the thermoplastic resin of the component [D] is less than 150°C, moldings produced therefrom may be liable to thermal deformation.

Furthermore, the terminal functional group in the thermoplastic resin is preferably a hydroxyl group, carboxyl group, thiol group, or anhydride group because they are reactive with a cation-polymerizable compound.

Examples thereof include commercial products of polyethersulfone such as SUMIKAEXCEL (registered trademark) PES3600P, SUMIKAEXCEL (registered trademark) PES5003P, SUMIKAEXCEL (registered trademark) PES5200P, SUMIKAEXCEL (registered trademark) PES7600P (all manufactured by Sumitomo Chemical Co., Ltd.), Virantage (registered trademark) VW-10200RFP, and Virantage (registered trademark) VW-10700RFP (both manufactured by Solvay Advanced Polymers); copolymeric oligomers of polyethersulfone and polyether ether sulfone as described in Published Japanese Translation of PCT International Publication JP 2004- 506789; and commercial products of polyetherimide such as Ultem (registered trademark) 1000, Ultem (registered trademark) 1010, and Ultem (registered trademark) 1040 (all manufactured by Solvay Advanced Polymers). An oligomer is a relatively low molecular weight polymer having a structure in which a finite number, commonly 10 to 100, of monomers are bonded to each other.

It is preferable for the component [D] according to the present invention to account for 1 to 45 parts by mass, more preferably 5 to 35 parts by mass, relative to 100 parts by mass of the component [B]. If the content of the component [D] is in this range, it ensures a good balance among the viscosity of the epoxy resin composition, tackiness properties of the resulting prepreg, and the mechanical properties of the resulting carbon fiber composite material.

For the present invention, it may also be desirable that part of the thermoplastic resin of the component [D] is incorporated in the form of undissolved thermoplastic resin particles. If part of the component [D] is incorporated in the form of thermoplastic resin particles, it serves to provide an epoxy resin composition with increased toughness and impact resistance when producing a carbon fiber composite material.

Good materials for such thermoplastic resin particles used for the present invention include the various thermoplastic resins listed previously to exemplify the thermoplastic resin of the component [D] used in a dissolved state in an epoxy resin composition. From the viewpoint of ensuring stable adhesive strength and impact resistance in the resulting carbon fiber composite material, it is preferable for them to be able to maintain their shapes in the carbon fiber composite material even after undergoing heat and pressure in the molding step, and it is also preferable for them to have partially crosslinked structures. In particular, preferred ones include polyamide, polyetherimide, polyamideimide, and polyphenylene ether. Preferred examples of such polyamide include polyamide 12, polyamide 11, polyamide 6, polyamide 66, polyamide 6/12 copolymer, and polyamide modified with an epoxy compound into a semi-IPN (interpenetrating polymer network) structure (semi-IPN polyamide) as described in Example 1 of Japanese Unexamined Patent Publication (Kokai) No. HEI 1-104624. In regard to the shape of the thermoplastic resin particles, they may be spherical particles, non-spherical particles, or porous particles, of which spherical particles are preferred because they work to maintain flow properties of the resin to ensure high viscoelasticity and also because they are free of starting points of stress concentrations to ensure high impact resistance.

Useful commercial products of polyamide particles that can be used suitably as the thermoplastic resin particles include SP-500, SP-10, TR-1, TR-2, 842P-48, and 842P-80 (all manufactured by Toray Industries, Inc.), Orgasol (registered trademark) 1002D, 2001UD, 2001EXD, 2002D, 3202D, 3501D, and 3502D (all manufactured by Arkema K.K.), Grilamid (registered trademark) TR90 (manufactured by Emser Werke, Inc.), and TROGAMID (registered trademark) CX7323, CX9701, and CX9704 (all manufactured by Degussa). These thermoplastic resin particle materials may be used singly, or a plurality thereof may be used in combination. Commercial products of polyetherimide include Ultem (registered trademark) 1000, Ultem (registered trademark) 1010, and Ultem (registered trademark) 1040 (all manufactured by Solvay Advanced Polymers).

It is preferable for these thermoplastic resin particles to have an average particle size of 1 µm or more and 50 µm or less, more preferably 5 µm or more and 50 µm or less. If it is in this range, it serves to produce a carbon fiber composite material having stable impact resistance.

The epoxy resin composition to be used for the prepreg according to the present invention may contain, for example, a coupling agent, thermosetting resin particles, inorganic filler such as silica gel, carbon black, clay, carbon nanotube, and metal powder, or flame retardant such as red phosphorus and phosphate, unless they impair the advantageous effects of the present invention.

It is preferable for the epoxy resin composition used in the prepreg according to present invention to have a viscosity of 1.0 × 10² Pa·s or more at 40°C from the viewpoint of handleability of the prepreg. If it is 1.0 × 10² Pa·s or more, excessive resin flows will not occur significantly during the molding of a carbon fiber composite material, leading to a decreased variation in the content of carbon fiber. If the viscosity at 40°C is low, on the other hand, tackiness properties are likely to deteriorate due to sinking of the resin that can occur during storage of the prepreg, possibly leading to a decrease in workability in laying-up layers of carbon fiber composite material.

For the epoxy resin composition to be used for the prepreg according to the present invention, the viscosity after maintaining it at 80°C for 2 hours is preferably 2.0 times or less as high as the initial viscosity at 80°C. Here, the viscosity increase ratio at 80°C can serve as an indicator of the pot life of an epoxy resin composition in a resin composition kneading step and a prepreg production step. More specifically, a smaller viscosity increase ratio at 80°C indicates a longer pot life at 80°C or less. If the viscosity increase ratio of an epoxy resin composition measured after maintaining it at 80°C for 3 hours is 2.0 or less, the impregnation properties in impregnating carbon fiber with the resin will not deteriorate in the prepreg production step, leading to moldings containing few voids.

The viscosity referred to herein is the complex viscosity η* determined by using a dynamic viscoelasticity measuring machine (ARES G2, manufactured by TA Instruments) equipped with parallel plates under the conditions of a frequency of 0.5 Hz and a plate-to-plate gap of 1 mm. The complex viscosity η* measured while maintaining the specimen at 40°C for 1 minute is defined as the 40°C viscosity. The complex viscosity η*1 is measured while maintaining the specimen at 80°C for 1 minute and the complex viscosity η*₁₈₀ is measured after maintaining it at 80°C for 2 hours, followed by calculating the viscosity increase ratio of η*₁₈₀/η*₁.

The heat resistance after water absorption of a carbon fiber composite material produced from the prepreg according to the present invention depends on the glass transition temperature after water absorption of the cured epoxy resin formed by curing the epoxy resin composition used in the prepreg according to the present invention. To produce a carbon fiber composite material having a high heat resistance after water absorption, it is preferable that the cured epoxy resin that is cured at 180°C for 120 minutes has a glass transition temperature of 170°C or more after water absorption. If the glass transition temperature of the cured epoxy resin after water absorption is 170°C or less, the carbon fiber composite material may fail to have adequate physical properties under high temperature, high humidity conditions. Here, a cured epoxy resin after water absorption is prepared by immersing a cured epoxy resin in boiling water for 48 hours. To determine the glass transition temperature, a cured resin plate cut to a specified size is examined by using a dynamic viscoelasticity measuring machine (ARES G2, manufactured by TA Instruments) at a temperature ramp rate of 5°C/min and a frequency of 1 Hz, and the temperature at the inflection point in the resulting curve showing the storage modulus G' is identified.

A variety of generally known production methods are available for producing the prepreg according to the present invention. An example is the hot-melt method, in which a film of epoxy resin is put on the surface of a carbon fiber sheet prepared by arranging carbon fiber bundles in a sheet-like form, followed by compression and heating for impregnation. In this production method, an epoxy resin composition may be spread over a piece of release paper using a reverse roll coater, knife coater, etc. to prepare films of the epoxy resin composition, and attaching such epoxy resin composition films to both sides of a carbon fiber sheet, followed by heating under pressure to impregnate the carbon fiber bundles.

The quantity of carbon fiber per unit area of the prepreg according to the present invention is preferably 70 to 2,000 g/m². If the quantity of carbon fiber is less than 70 g/m², a larger number of sheets have to be laid-up to achieve a required thickness when molding a carbon fiber composite material, which require troublesome operation in some cases. If the quantity of carbon fiber is more than 2,000 g/m², on the other hand, the prepreg tends to have poor draping properties.

It is necessary for the carbon fiber to account for 50 mass% or more in the prepreg. The content is preferably 50 to 80 mass%. If the carbon fiber content by mass is less than 50 mass%, the quantity of resin is likely to be so large that the advantage of carbon fiber composite material in terms of high specific strength and specific elastic modulus will not be realized and the resulting carbon fiber composite material will deteriorate in combustion properties in some cases. There are no specific limitations on the upper limit of the mass content of the carbon fiber in the prepreg, but it is preferably 80 mass% or less because, for example, a carbon fiber mass content of more than 80 mass% can lead to defective impregnation with the resin, resulting in a carbon fiber composite material containing many voids.

A carbon fiber composite material can be produced from the prepreg according to the present invention by, for example, the so-called heat and pressure molding method in which layers of the aforementioned prepreg according to the present invention are laid-up in a required form and subsequently shaped under heat and pressure while curing the resin. Useful techniques for the heat and pressure molding method include press molding, autoclave molding, bag molding, wrapping tape molding, and internal pressure molding.

A carbon fiber composite material obtained from the prepreg according to the present invention has high flame retardance because it is produced by curing the aforementioned prepreg according to the present invention. Regarding its flame retardance, when, for example, a thin carbon fiber composite material containing only one layer of the prepreg according to the present invention is subjected to the 60 second vertical flame test specified in FAR 25.853 Appendix F, Part I(a)(1)(i), it can give good results including a self-extinguishing time of 15 seconds or less, a burn length of 150 mm or less, and a drip flame time of 3 seconds or less.

### EXAMPLES

The invention is described in more detail below with reference to Examples. However, it is noted that the scope of the present invention is not limited to these Examples. Hereinafter, the term "parts" used to refer to the proportion of a component material means "parts by mass" unless otherwise specified. Determination of various characteristics (properties) was performed in an environment at a temperature of 23°C and relative humidity of 50% unless otherwise specified.

### <Raw materials used in Examples and Comparative examples>

### (1) Component [A]

- A twill weave woven fabric of Torayca (registered trademark) T400H-3K (3,000 fiber filaments, tensile strength 4,410 MPa, tensile elastic modulus 250 MPa, tensile elongation 1.8%)

### (2) Component [B]

- Araldite (registered trademark) MY721 (tetraglycidyl diaminodiphenyl methane, manufactured by Huntsman Advanced Materials)
- Epiclon (registered trademark) 830 (bisphenol F type epoxy resin, manufactured by DIC Corporation)

### (3) Component [C]

- BAFL (9,9-bis(4-aminophenyl) fluorene, manufactured by JFE Chemical Corporation)

In Examples 1, 3, 4, and 6 to 10 and Comparative examples 4 and 5, BAFL was uses in the form of powder with a maximum particle size of 13 µm. To prepare BAFL powder with a maximum particle size of 13 µm, the purchased raw powder of BAFL (hereinafter occasionally referred to as raw powder) was passed through a sieve for JIS tests with a mesh size of 20 µm, and the separated BAFL powder was collected for use.

In Example 2, BAFL powder with a maximum particle size of 44 µm was used. To prepare BAFL powder with a maximum particle size of 44 µm, raw powder was passed through a sieve for JIS tests with a mesh size of 50 µm, and the separated BAFL powder was collected for use.

In Example 5, BAFL powder with a maximum particle size of 83 µm was used. To prepare BAFL powder with a maximum particle size of 83 µm, raw powder was passed through a sieve for JIS tests with a mesh size of 90 µm, and the separated BAFL powder was collected for use.

In Comparative example 1, BAFL powder with a maximum particle size of 120 µm was used. To prepare BAFL powder with a maximum particle size of 120 µm, raw powder was passed through a sieve for JIS tests with a mesh size of 130 µm, and the separated BAFL powder was collected for use.

In Example 11, BAFL powder with a maximum particle size of 87 µm, which had no crystal structures, was used. To prepare BAFL powder with a maximum particle size of 87 µm, which had no crystal structures, raw powder was heated to 210°C for melting, then cooled, mechanically pulverized, and passed through a sieve for JIS tests with a mesh size of 90 µm, and the separated BAFL powder was collected for use.

### (4) Component [D]

- SUMIKAEXCEL (registered trademark) PES5003P (polyethersulfone, manufactured by Sumitomo Chemical Co., Ltd.)

- Ultem (registered trademark) 1010 (polyetherimide, manufactured by SABIC)

### (5) Curing agent component other than the component [C]

- Kayabond (registered trademark) C-200S (3,3',5,5'-tetramethyl-4,4'-diaminodiphenyl methane, manufactured by Nippon Kayaku Co., Ltd.)
- 3,3'-DAS (3,3'-diaminodiphenyl sulfone, manufactured by Mitsui Fine Chemical, Inc.)
- Lonzacure (registered trademark) M-MIPA (3,3'-diisopropyl-5,5'-diethyl-4,4'-diaminodiphenyl methane, manufactured by Lonza)

### <Evaluation methods>

### (6) Measurement of melting point of fluorene type curing agent

The melting point of a fluorene type curing agent was measured by using a differential scanning calorimeter (DSC Q2000, manufactured by TA Instruments). From a DSC curve prepared as the temperature was raised from 0°C to 300°C at a heating rate of 5°C/min, the endothermic peak was measured and the temperature at which the endotherm was at a maximum was adopted as the melting point.

### (7) Preparation of epoxy resin composition

The epoxy resin of the component [B] and the thermoplastic resin of the [D] were kneaded while heating until the component [D] was melted to provide a transparent viscous liquid. The fluorene type curing agent of the component [C] and/or other curing agents were kneaded with this liquid while heating to provide an epoxy resin composition.

The components and their proportions used in Examples and Comparative examples are shown in Tables 1 to 2.

In addition, the active hydrogen ratio of the component [C] was 50% in Examples 1 to 8 and 11 and Comparative examples 1, 4, and 5, 33% in Examples 9 and 10, and 0% in Comparative examples 2 and 3.

### (8) Measurement of viscosity of epoxy resin composition

The viscosity of an epoxy resin composition was measured by a dynamic viscoelasticity measuring machine (ARES-G2, manufactured by TA Instruments).

A specimen of an epoxy resin composition was set between upper and lower measuring jigs, which were in the form of parallel flat plates with a diameter of 40 mm, in such a manner that the distance between the upper and lower jig plates was 1 mm, and measurements were taken at an frequency of 0.5 Hz.

The complex viscosity η*₄₀ was measured as the specimen was maintained at 40°C for 1 minute.

The viscosity η*₁ was measured while maintaining the specimen at 80°C for 1 minute and the complex viscosity η*₁₈₀ was measured while maintaining it at 80°C for 3 hours, followed by calculating the viscosity increase ratio (pot life) of η*₁₈₀/η*₁.

(9) Measurement of glass transition temperature of cured epoxy resin after water absorption An epoxy resin composition was injected in a mold, then heated up in a hot air drier from 30°C at a rate of 1.5°C/min, heat-cured at 180°C for 2 hours, and cooled to 30°C at a rate of 2.5°C/min to prepare a cured resin plate with a thickness of 2 mm.

A test piece with a width of 12.7 mm and a length of 55 mm was cut out of the resulting cured resin plate and immersed in boiling water at 1 atm for 48 hours, and its glass transition temperature was determined by the DMA technique according to SACMA SRM18R-94.

The temperature at the intersection point between the tangent to the storage modulus G' curve in the glass region and the tangent thereto in the transition region was adopted as the glass transition temperature. Here, measurements were taken under the conditions of a temperature ramp rate of 5.0°C/min and a frequency of 1 Hz.

### (10) Preparation of prepreg

### (Examples 1 to 11 and Comparative examples 1 to 5)

For each example, an epoxy resin composition was spread over release paper with a knife coater to prepare two resin films having a specified areal weight, and then the two resin films were attached to both sides of a carbon fiber sheet, followed by impregnating the carbon fiber with the resin on a heating roller to prepare a prepreg.

Two resin films having a resin areal weight of 61.9 g/m² were prepared for each of Example 1 to 3 and 5 to 11 and Comparative examples 1 to 4. Then, the two resin films were attached to both sides of the carbon fiber of the component [A], followed by impregnating the carbon fiber with the resin on a heating roller to prepare a prepreg in which the areal weight of the carbon fiber was 220 g/m² and the mass content of the carbon fiber in the prepreg was 64%.

Except that a resin film was prepared with a resin areal weight of 79.5 g/m² in Example 4 and with a resin areal weight of 134.4 g/m² in Comparative example 5, the same procedure as above was carried out to prepare resin films. The mass content of the carbon fiber in the prepreg was 58% in Example 4 and 45% in Comparative example 5.

Tables 1 and 2 show the contents of the components of the epoxy resin composition in each final prepreg.

### (11) Evaluation of tackiness properties of prepreg

For each prepreg prepared in the paragraph (10) above, the tackiness properties of the prepreg left to stand at room temperature for 1 day and the tackiness properties of the prepreg left to stand at room temperature for 7 days were measured using a tackiness tester (PICMA Tackiness Tester II, manufactured by Toyo Seiki Co., Ltd.). A cover glass with a size of 18 mm × 18 mm was pressed against the prepreg by applying a force of 0.4 kgf for 5 seconds, and then it was pulled at a speed of 30 mm/min to determine the peeling resistance to represent the tackiness.

Here, tackiness properties were evaluated according to the three stage criterion described below. Five measurements were taken (n = 5) for evaluation, and if there were different measurements, the lowest rating was adopted.
A: The tackiness is 0.3 kg or more and 2.0 kg or less, indicating that proper adhesion is achieved.
B: The tackiness is 0.1 kg or more and less than 0.3 kg, or larger than 2.0 kg and 3.0 kg or less, indicating that the adhesion is slightly too strong or slightly too weak.
C: The tackiness is less than 0.1 kg or larger than 3.0 kg, indicating that the adhesion is too strong or there is no adhesion.

### (12) Measurement of compression strength of carbon fiber composite material

A total of 8 plies of the prepreg prepared in the paragraph (10) above were laid-up with their fibers aligned in parallel with the compression direction and molded by heating in an autoclave for 2 hours at a temperature of 180°C, a pressure of 0.3 MPa, and a temperature ramp rate of 1.5°C/min to provide a laminate.

From this laminate, a tabbed test piece with a width of 15 mm and a length of 78 mm was prepared.

This test piece was examined according to SACMA SRM IR-94.

### (13) Measurement of interlaminar shear strength of carbon fiber composite material under high temperature, high humidity conditions

A total of 8 plies of the prepreg prepared in the paragraph (10) above were laid-up and molded by heating in an autoclave for 2 hours at a temperature of 180°C, a pressure of 0.3 MPa, and a temperature ramp rate of 1.5°C/min to provide a laminate.

From this laminate, a test piece with a width of 12 mm and a length of 40 mm was prepared and immersed in warm water at 71°C for 2 weeks.

This test piece was subjected to interlaminar shear strength measurement according to ASTM D2344 in an environment at 135°C.

(14) Confirmation of undissolved matter in carbon fiber composite material A total of 8 plies of the prepreg prepared in the paragraph (10) above were laid-up and molded by heating in an autoclave for 2 hours at a temperature of 180°C, a pressure of 0.3 MPa, and a temperature ramp rate of 1.5°C/min to provide a laminate.

From this laminate, three test pieces with a length of 10 mm and a width of 10 mm was cut out and their cross sections were polished. Three photographs were taken from each test piece, that is, a total of 9 photographs were taken, under an optical microscope at a magnification of 50 or more in such a manner that the top and bottom faces of the laminate were included in the field of view.

If a plurality of shapeless fragments of foreign matter were found in the optical microscope photograph taken from a laminate, it was judged that undissolved matter was "present" whereas if no such shapeless fragments were found, it was judged that undissolved matter was "absent".

### (15) Combustibility test of plates of carbon fiber composite material

A layer of the prepreg prepared in the paragraph (10) above was molded by heating for 2 hours at a temperature of 180°C, a pressure of 0.3 MPa, and a temperature ramp rate of 1.5°C/min to provide a laminate.

The resulting carbon fiber composite material was cut to a width of 76 mm and a length of 305 mm.

This test piece was subjected to the 60 second vertical flame test specified in FAR 25.853 Appendix F, Part I(a)(1)(i).

The test piece was judged to be acceptable in this test if it met all of the requirements of a self-extinguishing time of 15 seconds or less, a burn length of 150 mm or less, and a drip flame time of 3 seconds or less.

### (Examples 1 to 5 and Comparative examples 1 and 4)

As seen from Table 1, in Examples 1 to 5, each fluorene type curing agent had a maximum particle size of 100 µm or less and each epoxy resin composition had an optimum combination of components, resulting in a cured epoxy resin having a favorable pot life and a high glass transition temperature after water absorption, a prepreg having high storage stability, and a carbon fiber composite material having high compression strength, high interlaminar shear strength under high temperature, high humidity conditions, and good combustion properties.

As seen from Table 2, in Comparative example 1, since the fluorene had a maximum particle size of more than 100 µm, part of the fluorene type curing agent was left undissolved and found in the carbon fiber composite material, leading to a low compression strength due to the undissolved matter acting as defects. In Comparative example 4, since no thermoplastic resin was contained, the viscosity at 40°C was low and the prepreg failed to maintain good tackiness properties during storage, resulting in deteriorated lamination performance. In addition, since the impregnating properties deteriorated, many voids were formed in the carbon fiber composite material, leading to a decrease in compression strength of the carbon fiber composite material.

### (Examples 6, 7, 9, and 10 and Comparative examples 2 and 3)

As seen from Table 1, in Examples 6, 7, 9, and 10, the content of the fluorene type curing agent was adjusted appropriately, thereby enabling the production of a carbon fiber composite material having high interlaminar shear strength under high temperature, high humidity conditions and good combustion properties. As seen from Table 2, since no fluorene type curing agent was contained in Comparative examples 2 and 3, the glass transition temperature after water absorption was low and the interlaminar shear strength under high temperature, high humidity conditions was also low in Comparative example 3. In both Comparative examples 2 and 3, furthermore, the absence of a fluorene type curing agent lead to poor combustion properties.

### (Example 8)

As seen from Table 1, in Example 8, the content of the fluorene type curing agent and the viscosity of the epoxy resin composition were adjusted appropriately, thereby enabling the production of a carbon fiber composite material having good combustion properties.

### (Examples 1, 4, and 11 and Comparative example 5)

As seen from Table 1, in Example 1, 4, and 11, the mass content of carbon fiber in the prepreg was adjusted above a certain value, thereby enabling the production of a prepreg having high heat resistance and good combustion properties. As seen from Table 2, in Comparative example 5, the mass content of carbon fiber in the prepreg was low and that of resin was high, thereby leading to poor combustion properties.

**[Table 11**

| | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|
| Component [A] | carbon fiber | Torayca® T400H-3K | ○ | ○ | ○ | ○ | ○ | ○ | ○ | ○ | ○ | ○ | ○ |
| Component [B] | epoxy resin | Araldite® 721 | 100 | 100 | 60 | 100 | 100 | 90 | 60 | 30 | 100 | 100 | 100 |
| | | EPICLON® 830 | | | 40 | | | 10 | 40 | 70 | | | |
| Component [C] | fluorene type curing agent | BAFL | 38 | 38 | 34 | 38 | 38 | 37 | 34 | 29 | 25 | 25 | 38 |
| | active hydrogen ratio of component [C] (%) | | 50 | 50 | 50 | 50 | 50 | 50 | 50 | 50 | 33 | 33 | 50 |
| Component [D] | thermoplastic resin | SUMIKAEXCEL O 5003P | 19 | 19 | 17 | 9 | 19 | | 2 | 16 | 18 | | 19 |
| | | Ultem® 1010 | | | | | | 5 | | | | 9 | |
| Other | curing agent | Kayabond® C-200S | | | 25 | | | 27 | 25 | 21 | | 18 | |
| | | Lonzacure® M-MIPA | 34 | 34 | | | 34 | | | | | | 34 |
| | | 3,3'-DAS | | | | 27 | | | | | 36 | 18 | |
| Properties of component [C] | melting point of fluorene type curing agent (°C) | | 234 | 235 | 234 | 234 | 236 | 234 | 234 | 234 | 234 | 234 | - |
| | maximum particle size of fluorene type curing agent (µm) | | 13 | 44 | 13 | 13 | 83 | 13 | 13 | 13 | 13 | 13 | 87 |
| Properties of epoxy resin composition | 40°C viscosity (Pa·s) | | 4.3×10³ | 3.9×10³ | 3.7×10³ | 2.2×10³ | 3.8×10³ | 7.3×10² | 7.6×10¹ | 8.3×10³ | 3.6×10³ | 2.1×10³ | 3.1×10³ |
| | pot life (viscosity increase ratio) | | 1.2 | - | - | - | - | - | - | - | - | | 3 |
| | glass transition temperature after water absorption (°C) | | 232 | 229 | 197 | 222 | 231 | 235 | 198 | 164 | 191 | 228 | 229 |
| Properties of prepreg | mass content of carbon fiber (mass%) | | 64 | 64 | 64 | 58 | 64 | 64 | 64 | 64 | 64 | 64 | 64 |
| | tackiness properties after 1-day storage at room temperature | | A | A | A | A | A | A | A | A | A | A | B |
| | tackiness properties after 7-day storage at room temperature | | A | A | A | A | A | B | c | B | A | A | c |
| Properties of fiber reinforced composite material | interlaminar shear strength under high temperature, high humidity conditions (MPa) | | 40 | 39 | 37 | 39 | 40 | 39 | 38 | 34 | 37 | 38 | 33 |
| | compression strength (MPa) | | 780 | - | - | - | - | - | 710 | - | - | - | - |
| | undissolved matter | | absent | absent | absent | absent | absent | absent | absent | absent | absent | absent | absent |
| | combustibility test | | acceptable | acceptable | acceptable | acceptable | acceptable | acceptable | acceptable | acceptable | acceptable | acceptable | acceptable |

**[Table 2]**

| | | | Comparative example 1 | Comparative example 2 | Comparative example 3 | Comparative example 4 | Comparative example 5 |
|---|---|---|---|---|---|---|---|
| Component [A] | carbon fiber | Torayca® T400H-3K | ○ | ○ | ○ | ○ | ○ |
| Component [B] | epoxy resin | Araldite® 721 | 100 | 100 | 100 | 100 | 100 |
| | | EPICLON® 830 | | | | | |
| Component [C] | fluorene type curing agent | BAFL | 38 | | | 38 | 38 |
| | active hydrogen ratio of component [C] (%) | | 50 | 0 | 0 | 50 | 50 |
| Component [D] | thermoplastic resin | SUMIKAEXCEL® 5003P | 19 | 17 | 17 | | 17 |
| | | Ultem® 1010 | | | | | |
| Other | curing agent | Kayabond® C-200S | | 55 | | | |
| | | Lonzacure® M-MIPA | 34 | | | 28 | 34 |
| | | 3,3'-DAS | | | 54 | | |
| Properties of component [C] | melting point of fluorene type curing agent (°C) | | 236 | - | - | 234 | 234 |
| | maximum particle size of fluorene type curing agent (µm) | | 120 | - | - | 13 | 13 |
| Properties of epoxy resin composition | 40°C viscosity (Pa·s) | | 4.3×10³ | 9.2×10² | 2.2×10³ | 1.2×10¹ | 5.7×10³ |
| | pot life (viscosity increase ratio) | | - | - | - | - | - |
| | glass transition temperature after water absorption (°C) | | 232 | 213 | 168 | 230 | 232 |
| Properties of prepreg | mass content of carbon fiber (mass%) | | 64 | 64 | 64 | 64 | 45 |
| | tackiness properties after 1-day storage at room temperature | | A | A | A | A | A |
| | tackiness properties after 7-day storage at room temperature | | A | B | A | c | A |
| Properties of fiber reinforced composite material | interlaminar shear strength under high temperature, high humidity conditions (MPa) | | 31 | 36 | 34 | 34 | 41 |
| | compression strength (MPa) | | 610 | - | - | 630 | - |
| | undissolved matter | | present | - | - | absent | absent |
| | combustibility test | | acceptable | unacceptable | unacceptable | acceptable | unacceptable |

## Claims

1. A prepreg produced by impregnating the component [A] specified below with an epoxy resin composition containing the components [B] to [D] specified below, wherein the component [A] in the prepreg accounts for 50 mass% or more:
[A] carbon fiber,
[B] epoxy resin,
[C] fluorene type curing agent having a maximum particle size of 100 µm or less, and
[D] thermoplastic resin.

2. A prepreg as set forth in claim 1, wherein the epoxy resin composition has a viscosity of 1.0 × 10² Pa·s or more as measured at a frequency of 0.5 Hz and a temperature of 40°C.

3. A prepreg as set forth in either claim 1 or 2, wherein the epoxy resin composition cured at 180°C for 120 minutes has a glass transition temperature of 170°C or more after water absorption.

4. A prepreg as set forth in any one of claims 1 to 3, that can be cured into a carbon fiber composite material having a burn length of 150 mm or less, a self-extinguishing time of 15 seconds or less, and a drip flame time of 3 seconds or less as determined according to the 60 second vertical flame test specified in FAR 25.853 Appendix F, Part I(a)(1)(i).

5. A prepreg as set forth in any one of claims 1 to 4, wherein the component [C] has a crystal structure.

6. A prepreg as set forth in claim 5, wherein the active hydrogen in the component [C] accounts for 25% or more of the total active hydrogen in all curing agents in the epoxy resin composition.
